# EUROPÄISCHE PATENTSCHRIFT

(11) **EP 3 586 050 B1**
(45) Veröffentlichungstag und Bekanntmachung des Hinweises auf die Patenterteilung: **13.09.2023**
(21) Anmeldenummer: 18703323.8
(22) Anmeldetag: 07.02.2018
(51) Int. Cl.: A62C 2/06, F16L 5/04, H02G 3/22, H02G 3/04

(54) **BRANDSCHUTZELEMENT**
FIRE RETARDANT ELEMENT
ÉLEMENT IGNIFUGE

(30) Priorität: 22.02.2017 EP 17157383
(43) Veröffentlichungstag der Anmeldung: 01.01.2020
(73) Patentinhaber: Hilti Aktiengesellschaft, 9494 Schaan (LI)
(72) Erfinder: MÜNZENBERGER, Herbert, 65191 Wiesbaden (DE)
(74) Vertreter: Hilti Aktiengesellschaft Corporate Intellectual Property
(86) Internationale Anmeldenummer: PCT/EP2018/052997
(87) Internationale Veröffentlichungsnummer: WO 2018/153662

(56) Entgegenhaltungen:
- GB-A- 1 532 410
- GB-A- 2 107 183
- US-A- 3 976 825

## Beschreibung

Die Erfindung betrifft ein Brandschutzelement zum Abschotten von durch Wände oder Decken hindurchführende Öffnungen, insbesondere von Leitungsdurchgängen, mit einem Formteil aus intumeszierendem Material.

Brandschutzelemente, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzelemente enthalten üblicherweise ein intumeszierendes Material mit Blähgraphit, das um die Leitungen herum angeordnet wird, und eine Verstärkungseinlage, die das intumeszierende Material stabilisiert.

Bei den bekannten Brandschutzelementen werden die Blähgraphitpartikel durch die Hitze an der Oberfläche aktiviert, expandieren zum Feuer hin und bilden zunächst eine isolierende Kruste. Diese wird jedoch nach einiger Zeit instabil und fällt herunter. Somit steht die Kruste nicht mehr als Isolationsschicht zur Verfügung, und die darunterliegende intumeszierende Schicht wird aktiviert. Auf diese Weise brennt das Brandschutzelement Schritt für Schritt ab und gewährleistet nur für eine begrenzte Dauer Schutz. US 3 976 825 A, GB 2 107 183 A und GB 1 532 410 A offenbaren ein Brandschutzelement gemäß dem Oberbegriff des Anspruchs 1.

Aufgabe der Erfindung ist es, ein Brandschutzelement zu schaffen, bei dem sich im Brandfall eine stabilere Kruste ausbildet und das dadurch verbesserte Brandschutzeigenschaften aufweist.

Die Erfindung ist in Anspruch 1 definiert. Zur Lösung der Aufgabe ist ein Brandschutzelement zum Abschotten von durch Wände oder Decken hindurchführende Öffnungen, insbesondere von Leitungsdurchgängen, mit einem Formteil aus intumeszierendem Material vorgesehen, wobei das Formteil eine Wabenstruktur aufweist. Im Sinne der Erfindung ist eine Wabenstruktur ein dreidimensionales Gitter, das in einer Schnittebene aus ein oder mehreren Grundformen in Form von Polygonen aufgebaut ist und sich entlang einer Achse erstreckt, die insbesondere senkrecht zur Schnittebene steht. Vorzugsweise weist die Wabenstruktur eine gleichförmige, sechseckige Grundform auf und bildet auf diese Weise eine Art Honig- oder Bienenwabe. Bevorzugt weisen die Waben keine Böden bzw. Decken auf, wodurch die Wabenstruktur durch mehrere nebeneinander angeordnete Röhren mit einem Querschnitt in Form eines Polygons gebildet ist. Grundsätzlich sind alle Grundformen möglich, die eine Parkettierung, d.h. die lückenlose und überlappungsfreie Überdeckung einer Ebene durch gleichförmige Teilflächen, erlauben. Auf diese Weise hat die Wabenstruktur eine homogene Wandstärke und damit homogene Eigenschaften wie Dichte, Festigkeit und Brandschutzeigenschaften. Der Vorteil des erfindungsgemäßen Brandschutzelements ist, dass aufgrund der gitterförmigen Wabenstruktur das intumeszierende Material in die Waben expandieren und sich dort mit intumeszierendem Material benachbarter Wabenstrukturen verbinden kann. Hierdurch bildet sich im Brandfall eine vernetze, stabile Kruste, die für eine längere Zeit einen zuverlässigen Brandschutz gewährleistet.

Das Formteil ist in einer ersten Richtung druckstabil und in allen anderen, zur ersten Richtung senkrecht stehenden Richtungen flexibel ausgebildet. Im Sinne der Erfindung ist unter flexibel zu verstehen, dass das Formteil von einem Monteur, insbesondere elastisch, zusammengedrückt werden kann. Unter druckstabil ist im Sinne der Erfindung zu verstehen, dass das Formteil in einer Richtung und entgegengesetzt dazu belastbar ist, ohne dass sich hierdurch das Formteil im Wesentlichen verformt, beispielsweise damit das Formteil von einem Monteur auch gegen eine wirkende Reibungskraft in eine Öffnung geschoben werden kann. Auf diese Weise kann das Brandschutzelement von einem Monteur vor Ort leicht auf die zu verschließende Öffnung durch Komprimieren angepasst und gleichzeitig auch unter Druck in die Öffnung eingeschoben werden. Alternativ kann das Formteil in zwei, vorzugsweise zueinander senkrechten Richtungen druckstabil und in der zu diesen Richtungen senkrechten Richtung flexibel ausgebildet sein. Ferner kann das Brandschutzelement mit mindestens einer druckstabilen Richtung in Form einer Platte auch als Wand oder auf Wänden montiert werden.

Es ist von Vorteil, wenn die erste Richtung parallel zur axialen Ausdehnung der Wabenstruktur verläuft. Somit ist das Brandschutzelement in der Richtung druckfest, die parallel zu den Wabenwänden der Wabenstruktur verläuft. Auf diese Weise erstrecken sich die Waben in axialer Richtung durch die Öffnung, vorzugsweise senkrecht zur Wand bzw. Decke der Öffnung, wodurch Leitungen durch das Brandschutzelement hindurchgeführt werden können, ohne dabei Wabenwände zu durchstoßen bzw. die Wabenstruktur zu beschädigen.

Gemäß einer bevorzugten Ausführungsform ist die Wabenstruktur mit einem Füllschaum gefüllt. Der Füllschaum gewährleistet einen rauchdichten Abschluss der Öffnung durch das Brandschutzelement, indem die Wabenstruktur, insbesondere vollständig, mit dem Füllschaum gefüllt ist. Ferner dient der Füllschaum zur Lagerung der Leitungen sowie der Schalldämmung.

Der Füllschaum braucht keine Brandschutzadditive aufweisen. Da die Wabenstruktur aus intumeszierendem Material die Brandschutzeigenschaften des Brandschutzelements bereitstellt, kann ein Füllschaum mit geringen oder keinen Brandschutzadditiven vorgesehen sein. Hierdurch ist das Brandschutzelement besonders kostengünstig herstellbar.

Der Füllschaum ist vorzugsweise flexibel, damit dieser durch den Füllschaum geführte Leitungen dicht umschließt und somit eine besonders gute Rauch- und/oder Schalldichtigkeit gewährleistet. Ferner kann das Brandschutzelement durch einen flexiblen Füllschaum leichter an verschiedene Öffnungen angepasst werden, da sich das Brandschutzelement so komprimieren lässt und von alleine in seinen Ausgangszustand strebt.

Es kann ein druckstabiler Füllschaum vorgesehen sein, um das Brandschutzelement stabiler zu gestalten.

In einer vorteilhaften Ausführungsform weist das Brandschutzelement einen Rahmen auf, der das Formteil in einer Umfangsrichtung zumindest abschnittsweise umgibt, insbesondere wobei die Umfangsrichtung sich um eine Achse erstreckt, die parallel zur axialen Ausdehnung der Wabenstruktur angeordnet ist. Hierbei sind vorzugsweise zwei entgegengesetzte Seiten des Formteils, insbesondere die Seiten in axialer Richtung der Waben, im Wesentlichen nicht von dem Rahmen bedeckt. Indem das Formteil in einen Rahmen integriert ist, wird das Formteil geschützt und stabilisiert. Auf diese Weise verbleibt die Intumeszenz-Kruste im Brandfall länger, das Formteil verbrennt langsamer, und die Brandschutzeigenschaften des Brandschutzelements sind verbessert.

Der Rahmen ist vorzugsweise einstückig. Dies bietet den Vorteil, dass es nur wenige Übergangsbereiche zwischen verschiedenen Abschnitten des Rahmens gibt, in denen intumeszierendes Material und/oder Füllmaterial im Brandfall austreten kann. Auf diese Weise begrenzt der Rahmen die Ausbreitung des intumeszierenden Materials im Brandfall und ermöglicht so, die Expansion des intumeszierenden Materials in eine gewünschte Richtung zu lenken. Da sich somit das intumeszierende Material nicht mehr unkontrolliert in alle Richtungen ausbreitet, kann die Menge an intumeszierendem Material in dem Brandschutzelement reduziert werden, wodurch sich geringere Herstellungskosten ergeben. Ferner stabilisieren sich verschiedene Abschnitte des Rahmens bei der Expansion des intumeszierenden Materials gegenseitig, sodass durch diese Gestaltung die strukturelle Integrität des Brandschutzelements verbessert ist.

Der Rahmen umfasst vorzugsweise ein Material aus der folgenden Gruppe: Pappe, Metall, Glasfasern, Basaltfasern, Kohlenstofffasern, oder Keramikfasern. Auch ein hybrider Aufbau des Rahmens aus mehreren Materialien ist möglich. Diese Materialien weisen im Vergleich zum intumeszierendem Material der Wabenstruktur eine höhere Temperaturbeständigkeit auf. Diese ist vorteilhaft, da der Rahmen von der das intumeszierende Material aktivierenden Temperatur nicht beeinträchtigt wird und auf diese Weise seine stabilisierende Funktion auch im Brandfall ausüben kann.

Vorzugsweise umfasst der Rahmen ein Metallblech, ein Streckmetall, eine mineralische Bauplatte, ein Glasfasergitter oder -gewebe. Die Verwendung eines Gewebes bietet eine gute Verbindung des Rahmens mit dem intumeszierenden Material und/oder dem Füllmaterial. Ferner behält ein Rahmen aus einem Gewebe seine stabilisierenden Eigenschaften auch bei vereinzelten strukturellen Schäden bei.

Der Rahmen kann ein intumeszierendes Material umfassen, wobei das intumeszierende Material identisch zum intumeszierenden Material der Wabenstruktur sein kann. Hierdurch dehnt sich der Rahmen im Brandfall zusätzlich zum intumeszierenden Material der Wabenstruktur aus und stellt einen dichten Verschluss der Öffnung sowie eine sichere Lagerung des Brandschutzelements in der Öffnung sicher.

In einer weiteren vorteilhaften Ausführungsform weist das Brandschutzelement eine Deckplatte auf, um das Formteil zu schützen. Die Deckplatte ist insbesondere dazu vorgesehen das Brandschutzelement in Richtung der axialen Ausdehnung der Wabenstruktur abzudecken. Vorzugsweise ist eine Deckplatte auf jeder außenliegenden, d.h. potentiell dem Brand zugewandten, Seite des Brandschutzelements vorgesehen. Es ist von Vorteil, wenn die Deckplatte eine Seite des Formteils im Wesentlichen vollständig abdeckt.

Die Deckplatte umfasst vorzugsweise ein Material aus der folgenden Gruppe: Pappe, Metall, Glasfasern, Basaltfasern, Kohlenstofffasern oder Keramikfasern. Auch ein hybrider Aufbau der Deckplatte aus mehreren Materialien ist möglich. Diese Materialien weisen im Vergleich zum intumeszierenden Material der Wabenstruktur eine hohe Temperaturbeständigkeit auf und verbessern die Brandschutzeigenschaften des Brandschutzelements.

Vorzugsweise umfasst die Deckplatte ein Metallblech, ein Streckmetall, eine mineralische Bauplatte, ein Glasfasergitter oder -gewebe. Die Verwendung eines Gewebes hat den Vorteil, dass Leitungen leichter durch die Deckplatte geführt werden können. Ferner behält eine Deckplatte aus einem Gewebe seine strukturelle Integrität auch bei vereinzelten Schäden bei.

Die Deckplatte kann ein intumeszierendes Material umfassen. Hierdurch stellt die Deckplatte eine zusätzliche intumeszierende Schicht dar, die die Brandschutzeigenschaften des Brandschutzelements verbessert.

Es ist von Vorteil, wenn das Formteil Blähgraphit aufweist. Indem das intumeszierende Material der Wabenstruktur als wesentlichen Bestandteil Blähgraphit enthält, bilden sich im Brandfall Äste aus Blähgraphitpartikeln in den Waben, die sich mit anderen Ästen aus Blähgraphitpartikeln von gegenüberliegenden Wabenwänden verhaken und Cluster bilden. Auf diese Weise entsteht im Brandfall eine vernetzte Struktur aus Blähgraphitpartikeln, die eine besonders hohe Stabilität der Intumeszenz-Kruste sicherstellt und damit die Brandschutzeigenschaften des Brandschutzelements entscheidend verbessert.

Weitere Vorteile und Merkmale ergeben sich aus der nachfolgenden Beschreibung in Verbindung mit den beigefügten Zeichnungen. In diesen zeigen:
Figur 1 in einer perspektivischen Darstellung eine erste Ausführungsform eines erfindungsgemäßen Brandschutzelements,
Figur 2 in einer perspektivischen Darstellung eine zweite Ausführungsform eines erfindungsgemäßen Brandschutzelements,
Figur 3 in einer perspektivischen Darstellung das Brandschutzelement aus Figur 2 mit einer Deckplatte,
Figur 4 in einer perspektivischen Darstellung eine dritte Ausführungsform eines erfindungsgemäßen Brandschutzelements, das in einer Öffnung eingebaut ist, und
Figur 5 in einer schematischen Darstellung ein Cluster aus Blähgraphitpartikeln in einer Wabe des Brandschutzelements aus Figur 4.

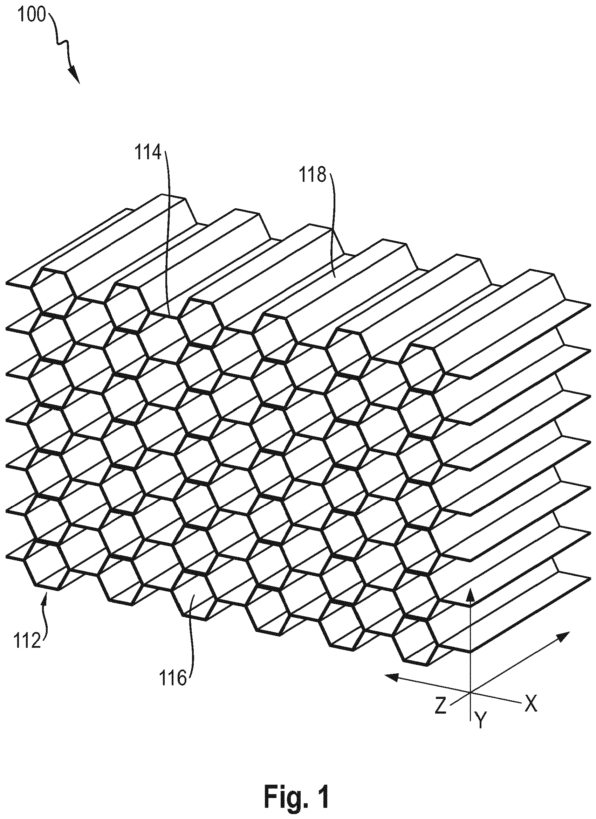

In Figur 1 ist ein erfindungsgemäßes Brandschutzelement 100 mit einem Formteil 112 aus intumeszierendem Material gezeigt, das zum brandsicheren Verschluss von Bauteilöffnungen mit Leitungsdurchführungen wie Kabel und/oder Rohre vorgesehen ist.

Das Formteil 112 ist ein näherungsweise quaderförmiger Block, dessen Kanten sich entlang der Achsen X, Y, und Z eines orthogonalen Koordinatensystems erstrecken.

In einer alternativen Ausführungsform kann das Formteil 112 eine beliebige Geometrie aufweisen, die geeignet ist, eine durch Wände oder Decken hindurchführende Öffnung sicher zu verschließen. Insbesondere kann das Formteil 112 als Platte, Matte oder Stopfen ausgebildet sein. Ferner kann das Formteil 112 als Profil vorgesehen sein, wodurch es insbesondere zum Abschotten von Fugen einsetzbar ist.

Das Formteil 112 hat eine Wabenstruktur 114, die durch Waben 116 mit einer gleichseitigen sechseckigen Grundform in der X-Y-Ebene gebildet ist und deren Wabenwände 118 sich in Z-Richtung axial erstrecken.

Die Waben 116 sind röhrenförmig vorgesehen, d.h. die Waben haben in axialer Richtung Z keine Böden bzw. Decken. Hierdurch können Leitungen in axialer Richtung Z widerstandsfrei durch das Formteil 112 geführt werden, ohne dass hierzu die Wabenstruktur 114 durchstoßen werden muss. Ein weiterer Vorteil dieses röhrenförmigen Aufbaus der Wabenstruktur 114 ist, dass das Brandschutzelement 100 in axialer Richtung Z luftdurchlässig ist. Auf diese Weise kann das Brandschutzelement 100 beispielsweise die nötige Ventilation in einem Spalt einer Wand mit einer vorgehängten Fassade sicherstellen, den Spalt aber im Brandfall durch die Reaktion des intumeszierenden Materials verschließen.

Durch diesen Aufbau ist das Brandschutzelement 100 in axialer Richtung Z druckstabil und in den Richtungen X und Y flexibel ausgebildet, sodass das Brandschutzelement 100 mit geringem Kraftaufwand eines Monteurs in einer beliebigen Richtung senkrecht zur axialen Ausdehnung der Wabenstruktur 114 zusammendrücken lässt.

In einer alternativen Ausführungsform kann das Formteil 112 Waben 116 mit Decken bzw. Böden aufweisen, die die Stabilität der Wabenstruktur 114 erhöht und/oder die Waben 116 rauch- und/oder schalldicht verschließt.

Das intumeszierende Material, aus dem das Formteil 112 gebildet ist, umfasst einen Anteil Blähgraphit und kann je nach Anforderung ein spezielles Intumeszenzverhalten (unter anderem Schaumhöhe, Druck und Aktivierungstemperatur) aufweisen, mittels dem das Brandschutzelement 100 an unterschiedliche Einsatzbedingungen angepasst werden kann.

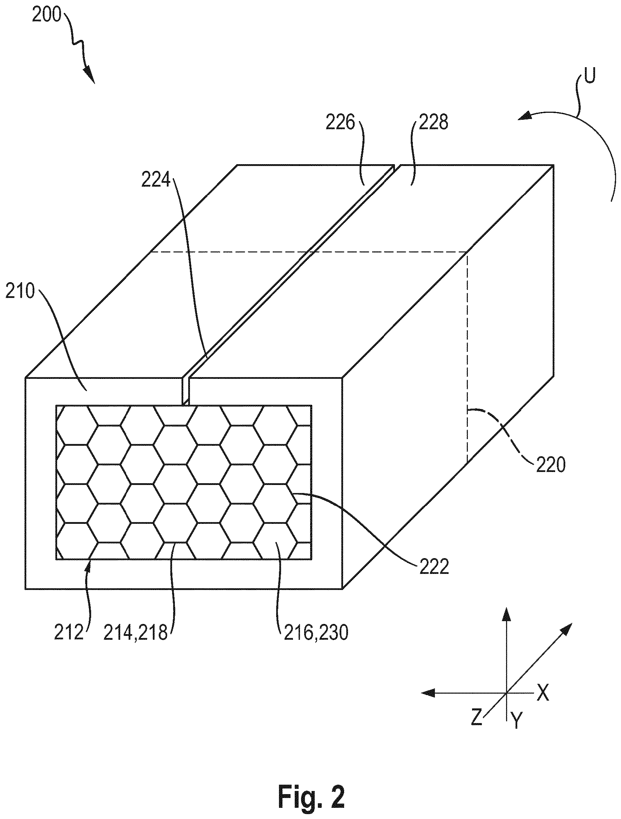

In Figur 2 ist eine weitere Ausführungsform eines erfindungsgemäßen Brandschutzelements 200 gezeigt, das einen Rahmen 210 sowie ein Formteil 212 aus intumeszierendem Material mit einer Wabenstruktur 214 umfasst, welches identisch zum Formteil 112 des Brandschutzelements 100 aufgebaut ist. Für gleiche Strukturen mit gleichen Funktionen sind im Folgenden daher entsprechende Bezugszeichen vergeben.

Das Brandschutzelement 200 ist quaderförmig und wird von dem Rahmen 210 an seinem Umfang 220 in Umfangsrichtung U umschlossen, wobei die Stirnseiten 222 des Formteils 212 frei bleiben. Die Umfangsrichtung U erstreckt sich um die Z-Achse, die parallel zur axialen Ausrichtung der Waben 216 angeordnet ist. Somit zeigen die Stirnseiten 222 die Grundform der Wabenstruktur 214 in der X-Y-Ebene und die Waben 216 erstrecken sich in Z-Richtung durch das gesamte Formteil 212.

Die Erfindung ist nicht auf Brandschutzelemente 200 mit quaderförmigen Formteilen 212 und Rahmen 210 begrenzt, sondern umfasst auch Brandschutzelemente 200, die eine beliebige Form und einem beliebigen Querschnitt aufweisen.

Der Rahmen 210 bedeckt den Umfang 220 bis auf einen schmalen Schlitz 224 vollständig. Der Schlitz 224 ist dabei von zwei entgegengesetzt angeordneten Enden 226, 228 des Rahmens 210 gebildet, die sich auf einer Seite des Brandschutzelements 200 gegenüberliegen.

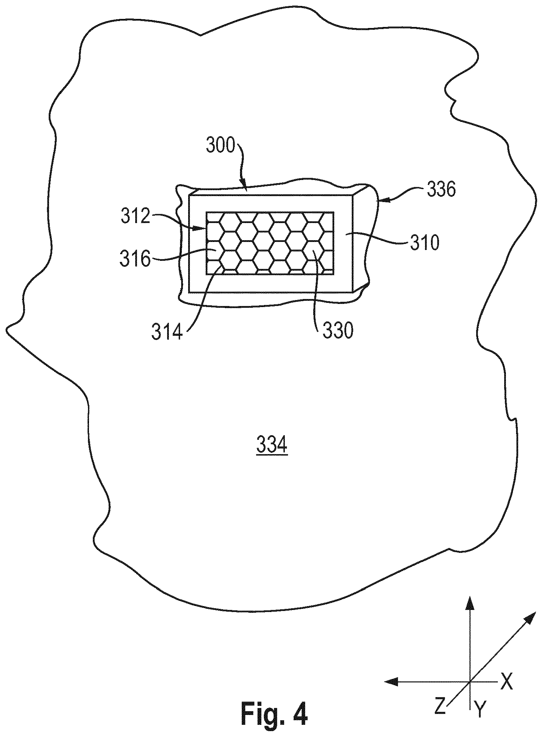

In einer alternativen Ausführungsform kann der Rahmen 210 in Umfangsrichtung U geschlossen sein und keinen Schlitz 224 aufweisen (siehe Figur 4).

Der Rahmen 210 ist vorzugsweise einstückig. Alternativ kann der Rahmen 210 aus mehreren miteinander verbundenen Abschnitten gebildet sein.

Die Waben 216 der Wabenstruktur 214 sind mit einem flexiblen Füllschaum 230 gefüllt. Alternativ kann die Wabenstruktur 214 mit einem druckstabilen Füllschaum 230 gefüllt sein.

Der Füllschaum 230 weist im Wesentlichen keine Brandschutzadditive auf. Alternativ kann der Füllschaum 230 Brandschutzadditive umfassen, um die Brandschutzeigenschaften des Brandschutzelements 200 zu verbessern.

Die Wabenstruktur 214 ist vorzugweise gleichmäßig mit dem Füllschaum 230 gefüllt, um homogene Eigenschaften über das gesamte Formteil 212 zu gewährleisten.

In einer alternativen Ausführungsform können zumindest ein Teil der Waben 216 abschnittsweise mit einem Füllschaum 230 gefüllt sein. Beispielsweise können die Waben 216 lediglich an den Stirnseiten 222 mit Füllschaum 230 gefüllt sein, während die Waben 216 im Inneren leer sind. Auf diese Weise kann Füllschaum 230 eingespart und das Gewicht des Brandschutzelements 200 reduziert werden.

Ferner können die Waben 216 des Formteils 212 mit unterschiedlichen Füllschäumen 230 gefüllt sein, oder das Formteil 212 kann leere Waben 216, d.h. ohne Füllschaum 230, aufweisen, um die Eigenschaften der verschiedenen Füllschäume 230 bzw. von leeren Waben 216 zu kombinieren. Beispielsweise können alle Waben 216, die an eine Wabe 216 mit einem druckfesten Füllschaum 230 angrenzen, mit einem flexiblen Füllschaum 230 gefüllt sein. Auf diese Weise ist das Formteil 212 durch den flexiblen Füllschaum 230 zumindest teilweise komprimierbar und weist gleichzeitig durch die Waben 216 mit druckstabilem Füllschaum 230 eine verbesserte Stabilität auf. Es ist ferner von Vorteil, wenn unterschiedliche Füllschäume 230, beispielsweise durch eine farbige Markierung an den Stirnseiten 222, identifizierbar sind. Dies ermöglicht unter anderem eine vereinfachte Montage, indem Leitungen gezielt durch Waben 216 mit einem Füllschaum 230 geführt werden können, der aufgrund seiner Eigenschaften weniger Widerstand beim Durchführen der Leitungen bietet oder der eng an den Leitungen anliegt und auf diese Weise eine besonders hohe Dichtigkeit gewährleistet.

Der Füllschaum 230 ist fest, vorzugsweise stoffschlüssig, mit der Wabenstruktur 214 verbunden. Hierdurch ist sichergestellt, dass der Füllschaum 230 nicht aus den Waben 216 herausgedrückt wird, wenn eine Leitung durch den Füllschaum 230 geführt oder eine Durchführung für eine Leitung im Füllschaum 230 gebildet wird.

Das Formteil 212 ist fest, vorzugsweise stoffschlüssig, mit dem Rahmen 210 verbunden.

Der Rahmen 210 besteht aus Steckmetall. In einer alternativen Ausführungsform kann der Rahmen 210 aus einer Platte, einer Matte, einem Gitter oder einem Gewebe gebildet sein, welche(s) vorzugsweise aus Pappe, Metall, Glasfasern, Basaltfasern, Kohlenstofffasern oder Keramikfasern besteht.

In einer alternativen Ausführungsform kann der Rahmen 210 ein intumeszierendes Material, insbesondere das gleiche intumeszierende Material wie die Wabenstruktur 214, umfassen.

Der Rahmen 210 kann ausschließlich aus intumeszierendem Material gebildet sein. Alternativ kann der Rahmen 210 das intumeszierende Material zusätzlich aufweisen, wobei das nicht intumeszierende Material des Rahmens 210 eine Verstärkungseinlage bilden kann, die auf einer Schicht aus intumeszierendem Material angebracht oder zumindest teilweise in einer Schicht aus intumeszierendem Material angeordnet ist. In beiden Fällen ist die Schicht aus intumeszierendem Material fest mit der Verstärkungseinlage verbunden.

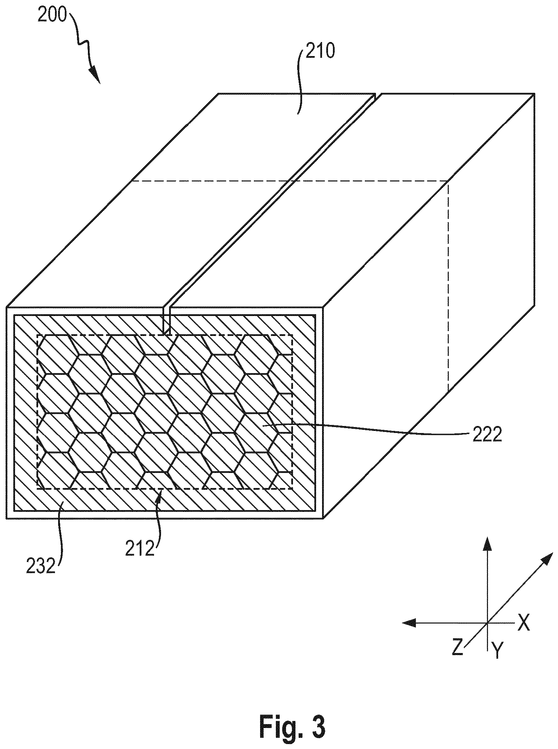

Das Brandschutzelement 200 kann eine Deckplatte 232 (siehe Figur 3 aufweisen, die eine Seite des Brandschutzelements 200 zumindest abschnittsweise bedeckt.

In Figur 3 bedeckt die Deckplatte 232 die Stirnseite 222 des Formteils 212 und bildet auf diese Weise eine zusätzliche Schutzschicht.

Die Deckplatte 232 besteht aus Steckmetall. In einer alternativen Ausführungsform kann die Deckplatte 232 aus einer Platte, einer Matte, einem Gitter oder einem Gewebe gebildet sein, welche(s) vorzugsweise aus Pappe, Metall, Glasfasern, Basaltfasern, Kohlenstofffasern oder Keramikfasern besteht.

In einer alternativen Ausführungsform kann die Deckplatte 232 ein intumeszierendes Material, insbesondere das gleiche intumeszierende Material wie die Wabenstruktur 214, umfassen.

Die Deckplatte 232 ist fest, vorzugsweise stoffschlüssig, mit dem Formteil 212 und/oder dem Rahmen 210 verbunden.

Das Brandschutzelement 200 kann mehrere Deckplatten 232 aufweisen, die an verschiedenen Seiten des Brandschutzelements 200 angeordnet sind.

Mehrere Deckplatten 232 können nebeneinander und/oder übereinander auf einer Seite des Brandschutzelements 200 angeordnet sein.

In einer bevorzugten Ausführungsform ist das Brandschutzelement 200 plattenförmig und weist auf seiner Ober- und/oder Unterseite eine Deckplatte 232 auf, die die entsprechende Seite vorzugsweise vollständig bedeckt. Hierbei verbessert die Deckplatte 232 die Stabilität des plattenförmigen Brandschutzelements.

Die Herstellung der Wabenstruktur 114, 214 des erfindungsgemäßen Brandschutzelements 100, 200 erfolgt mittels eines intumeszierenden Schaumes, der in eine Form mit einer entsprechenden Geometrie eingebracht wird.

Ist für das Brandschutzelement 100, 200 ein Rahmen 210 aus intumeszierendem Material vorgesehen, so kann dieser direkt in diesem Schritt mittels einer entsprechenden Form ausgebildet werden.

In einem nachfolgenden Schritt können die Waben 116, 216 mit einem Füllschaum 230 ausgespritzt werden.

Um ein Brandschutzelement 100, 200 mit einem Rahmen 210 zu bilden, kann der Rahmen 210 in einer offenen Form, beispielsweise als Platte oder mit U-Profil, vorgesehen sein. Das Formteil 112, 212 wird auf der Rahmeninnenseite platziert und die Enden 226, 228 um das Formteil 112, 212 gefaltet, wodurch der geschlossene Rahmen 210 gebildet wird.

Schlitze 224 im Rahmen 210 können durch ein geeignetes Brandschutzmittel, beispielsweise eine intumeszierende Einlage, verschlossen und/oder mit einem intumeszierenden Schaummaterial ausgespritzt werden.

Alternativ kann das Formteil 112, 212 auch in einen bereits gebildeten Rahmen 210 eingesetzt werden.

Vorzugsweise weist das Formteil 112, 212 ein kleines Übermaß auf, sodass das Formteil 112, 212 im Rahmen 210 mittels einer Presspassung gehalten wird und Lücken sicher abgedichtet werden.

Zusätzlich oder alternativ kann das Formteil 112, 212 stoffschlüssig, beispielsweise durch Kleben, im Rahmen 210 befestigt sein, um zu verhindern, dass das Formteil 112, 212 aus dem Rahmen 210 herausgedrückt werden kann.

In einem alternativen Herstellungsverfahren wird zuerst der Rahmen 210 des Brandschutzelements 200 gebildet und anschließend das Formteil 112, 212 direkt im Rahmen 210 ausgebildet. Hierbei kann der Rahmen 210 als Teil der Form dienen, die zur Herstellung des Formteils 112, 212 verwendet wird.

Das Brandschutzelement 100, 200 kann fertig ausgebildet in eine zu verschließende Öffnung eingebaut werden.

Alternativ kann das Brandschutzelement 100, 200 erst in der zu verschließenden Öffnung fertiggestellt werden, insbesondere indem der Füllschaum 230 erst in die Waben 216 eingebracht wird, wenn die Wabenstruktur 214 bereits in der Öffnung angeordnet ist. Hierbei kann die Wabenstruktur 214 genutzt werden, um Leitungen beabstandet voneinander durch das Brandschutzelement zu führen, bevor der Füllschaum 230 eingebracht ist.

In Figur 4 ist ein Ausschnitt einer Wand 334 mit einer Öffnung 336 gezeigt, in der ein Brandschutzelement 300 als Brandschott eingebaut ist.

Das Brandschutzelement 300 ist so angeordnet, dass die Stirnseiten 322 im Wesentlichen parallel zu Wand 334 ausgerichtet sind und die Seiten, die von dem Rahmen 310 bedeckt sind, in Richtung der Wand 334 zeigen. Auf diese Weise erstrecken sich die Waben 316 in Z-Richtung durch die Öffnung 336 und Leitungen können durch das Brandschutzelement 300 hindurchgeführt werden, ohne dabei die Wabenstruktur 314 und/oder den Rahmen 310 zu beschädigen.

Aufgrund der Flexibilität der Wabenstruktur 314 senkrecht zur Ausdehnung der Waben 316 in Z-Richtung kann das Brandschutzelement 300 in X- und Y-Richtung mit geringem Kraftaufwand komprimiert und an den Querschnitt der Öffnung 336 angepasst werden. Durch die Stabilität der Wabenstruktur 314 in Richtung der axialen Ausdehnung der Waben 316 weist das Brandschutzelement 300 ferner die notwendige Druckfestigkeit in Z-Richtung auf, um das Brandschutzelement 300 in die Öffnung 336 hineinzudrücken bzw. schieben zu können.

Um Leitungen durch das Brandschutzelement 300 zu führen, kann beispielsweise mittels einer Lanze eine Durchführung im Füllschaum 330 geschaffen werden, durch die die Leitung geschoben werden kann.

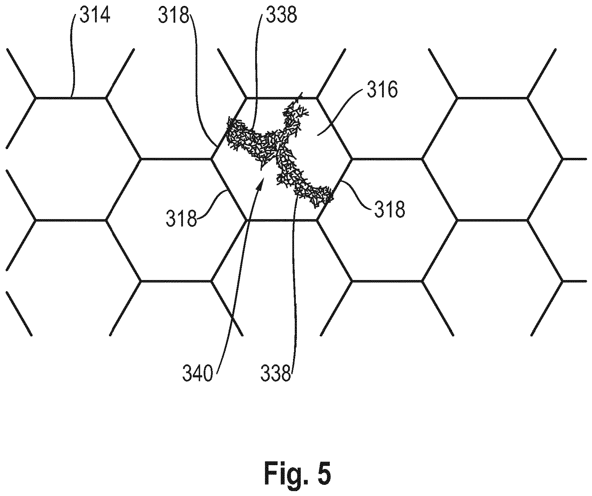

In Figur 5 ist anhand einer Wabe 316 beispielhaft dargestellt, wie sich das erfindungsgemäße Brandschutzelement im Brandfall verhält. Bei Überschreiten einer Grenztemperatur werden die Blähgraphitpartikel in der Wabenstruktur 314 aktiviert und expandieren als Äste 338 in die Waben 316. Dort verzweigen sich die Äste 338 verschiedener Wabenwände 318 und bilden Cluster 340, die zu einer Vernetzung der Wabenstruktur 314 führt. Auf diese Weise erhöht sich die Stabilität der sich bildenden Intumeszenz-Kruste, wodurch diese einen länger andauernden Schutz bietet.

Je nachdem ob, wie oder mit welcher Art von Füllschaum die Waben 316 gefüllt sind, beeinflusst das Ausbreitungsverhalten der Äste 338 und die Bildung von Clustern 340. Durch geeignete Wahl der Füllungen der Waben 316 sowie deren Anordnung können hierdurch spezielle Vernetzungsmuster bereitgestellt werden, die dem Brandschutzelement 300 im Brandfall besonders günstige Brandschutzeigenschaften verleihen.

Mit dem erfindungsgemäßen Brandschutzelement lässt sich auf diese Weise schnell und einfach eine durch Wände oder Decken hindurchführende Öffnung sicher und andauernd abschotten.

## Patentansprüche

1. Brandschutzelement (100, 200, 300) zum Abschotten von durch Wände (334) oder Decken hindurchführende Öffnungen (336), insbesondere von Leitungsdurchgängen, mit einem Formteil (112, 212, 312) aus intumeszierendem Material, wobei das Formteil (112, 212, 312) eine Wabenstruktur (114, 214, 314) aufweist, **dadurch gekennzeichnet, dass** das Formteil (112, 212, 312) in einer ersten Richtung (Z) druckstabil und in allen anderen, zur ersten Richtung (Z) senkrecht stehenden Richtungen (X, Y) flexibel ausgebildet ist.

2. Brandschutzelement nach Anspruch 1, **dadurch gekennzeichnet, dass** die erste Richtung (Z) parallel zur axialen Ausdehnung der Wabenstruktur (114, 214, 314) verläuft.

3. Brandschutzelement nach Anspruch 1 oder 2, **dadurch gekennzeichnet, dass** die Wabenstruktur (114, 214, 314) mit einem Füllschaum (230, 330) gefüllt ist.

4. Brandschutzelement nach Anspruch 3, **dadurch gekennzeichnet, dass** der Füllschaum (230, 330) keine Brandschutzadditive aufweist.

5. Brandschutzelement nach Anspruch 3 oder 4, **dadurch gekennzeichnet, dass** der Füllschaum (230, 330) flexibel ist.

6. Brandschutzelement nach Anspruch 3 oder 4, **dadurch gekennzeichnet, dass** der Füllschaum (230, 330) druckstabil ist.

7. Brandschutzelement nach einem der vorhergehenden Ansprüche, **dadurch gekennzeichnet, dass** das Brandschutzelement (100, 200, 300) einen Rahmen (210, 310) aufweist, der das Formteil (112, 212, 312) in einer Umfangsrichtung (U) zumindest abschnittsweise umgibt, insbesondere wobei die Umfangsrichtung (U) sich um eine Achse (Z) erstreckt, die parallel zur axialen Ausdehnung der Wabenstruktur (114, 214, 314) angeordnet ist.

8. Brandschutzelement nach Anspruch 7, **dadurch gekennzeichnet, dass** der Rahmen (210, 310) ein Material aus der folgenden Gruppe umfasst: Pappe, Metall, Glasfasern, Basaltfasern, Kohlenstofffasern, oder Keramikfasern.

9. Brandschutzelement nach Anspruch 7 oder 8, **dadurch gekennzeichnet, dass** der Rahmen (210, 310) ein intumeszierendes Material umfasst.

10. Brandschutzelement nach einem der vorhergehenden Ansprüche, **dadurch gekennzeichnet, dass** das Brandschutzelement (100, 200, 300) eine Deckplatte (232) aufweist.

11. Brandschutzelement nach Anspruch 10, **dadurch gekennzeichnet, dass** die Deckplatte (232) ein Material aus der folgenden Gruppe umfasst: Pappe, Metall, Glasfasern, Basaltfasern, Kohlenstofffasern oder Keramikfasern.

12. Brandschutzelement nach Anspruch 10 oder 11, **dadurch gekennzeichnet, dass** die Deckplatte (232) ein intumeszierendes Material umfasst.

13. Brandschutzelement nach einem der vorhergehenden Ansprüche, **dadurch gekennzeichnet, dass** das Formteil (112, 212, 312) Blähgraphit aufweist.

## Claims

1. Fire protection element (100, 200, 300) for sealing openings (336) passing through walls (334) or ceilings, in particular line feedthroughs, having a molded part (112, 212, 312) made of an intumescent material, the molded part (112, 212, 312) having a honeycomb structure (114, 214, 314), **characterized in that** the molded part (112, 212, 312) is designed so as to be resistant to pressure in a first direction (Z) and flexible in all other directions (X, Y) that are perpendicular to the first direction (Z).

2. Fire protection element according to claim 1, **characterized in that** the first direction (Z) extends in parallel with the axial extension of the honeycomb structure (114, 214, 314).

3. Fire protection element according to either of claims 1 and 2, **characterized in that** the honeycomb structure (114, 214, 314) is filled with a filling foam (230, 330).

4. Fire protection element according to claim 3, **characterized in that** the filling foam (230, 330) has no fire protection additives.

5. Fire protection element according to either of claims 3 and 4, **characterized in that** the filling foam (230, 330) is flexible.

6. Fire protection element according to either of claims 3 and 4, **characterized in that** the filling foam (230, 330) is resistant to pressure.

7. Fire protection element according to any of the preceding claims, **characterized in that** the fire protection element (100, 200, 300) has a frame (210, 310) which surrounds the molded part (112, 212, 312) at least in portions in a peripheral direction (U), the peripheral direction (U) in particular extending about an axis (Z) which is arranged in parallel with the axial extension of the honeycomb structure (114, 214, 314).

8. Fire protection element according to claim 7, **characterized in that** the frame (210, 310) comprises a material from the following group: cardboard, metal, glass fibers, basalt fibers, carbon fibers or ceramic fibers.

9. Fire protection element according to either of claims 7 and 8, **characterized in that** frame (210, 310) comprises an intumescent material.

10. Fire protection element according to any of the preceding claims, **characterized in that** the fire protection element (100, 200, 300) has a cover plate (232).

11. Fire protection element according to claim 10, **characterized in that** the cover plate (232) comprises a material from the following group: cardboard, metal, glass fibers, basalt fibers, carbon fibers or ceramic fibers.

12. Fire protection element according to either of claims 10 and 11, **characterized in that** the cover plate (232) comprises an intumescent material.

13. Fire protection element according to any of the preceding claims, **characterized in that** the molded part (112, 212, 312) contains expandable graphite.

## Revendications

1. Élément de protection contre l'incendie (100, 200, 300) destiné à calfeutrer des ouvertures (336) pratiquées à travers des parois (334) ou des plafonds, en particulier des passages de câbles, comportant une pièce moulée (112, 212, 312) constituée d'une matière intumescente, la pièce moulée (112, 212, 312) présentant une structure alvéolaire (114, 214, 314), **caractérisé en ce que** la pièce moulée (112, 212, 312) est conçue de manière à résister à la pression dans une première direction (Z) et à être flexible dans toutes les autres directions (X, Y) perpendiculaires à la première direction (Z).

2. Élément de protection contre l'incendie selon la revendication 1, **caractérisé en ce que** la première direction (Z) s'étend parallèlement à l'extension axiale de la structure alvéolaire (114, 214, 314).

3. Élément de protection contre l'incendie selon la revendication 1 ou 2, **caractérisé en ce que** la structure alvéolaire (114, 214, 314) est remplie d'une mousse de remplissage (230, 330).

4. Élément de protection contre l'incendie selon la revendication 3, **caractérisé en ce que** la mousse de remplissage (230, 330) ne présente pas d'additifs de protection contre l'incendie.

5. Élément de protection contre l'incendie selon la revendication 3 ou 4, **caractérisé en ce que** la mousse de remplissage (230, 330) est flexible.

6. Élément de protection contre l'incendie selon la revendication 3 ou 4, **caractérisé en ce que** la mousse de remplissage (230, 330) résiste à la pression.

7. Élément de protection contre l'incendie selon l'une des revendications précédentes, **caractérisé en ce que** l'élément de protection contre l'incendie (100, 200, 300) présente un cadre (210, 310) qui entoure la pièce moulée (112, 212, 312) au moins dans certaines régions dans une direction circonférentielle (U), en particulier la direction circonférentielle (U) s'étendant autour d'un axe (Z) qui est disposé parallèlement à l'extension axiale de la structure alvéolaire (114, 214, 314).

8. Élément de protection contre l'incendie selon la revendication 7, **caractérisé en ce que** le cadre (210, 310) comprend une matière choisie dans le groupe suivant : carton, métal, fibres de verre, fibres de basalte, fibres de carbone ou fibres de céramique.

9. Élément de protection contre l'incendie selon la revendication 7 ou 8, **caractérisé en ce que** le cadre (210, 310) comprend une matière intumescente.

10. Élément de protection contre l'incendie selon l'une des revendications précédentes, **caractérisé en ce que** l'élément de protection contre l'incendie (100, 200, 300) présente une plaque de recouvrement (232).

11. Élément de protection contre l'incendie selon la revendication 10, **caractérisé en ce que** la plaque de recouvrement (232) comprend une matière choisie dans le groupe suivant : carton, métal, fibres de verre, fibres de basalte, fibres de carbone ou fibres de céramique.

12. Élément de protection contre l'incendie selon la revendication 10 ou 11, **caractérisé en ce que** la plaque de recouvrement (232) comprend une matière intumescente.

13. Élément de protection contre l'incendie selon l'une des revendications précédentes, **caractérisé en ce que** la pièce moulée (112, 212, 312) présente du graphite expansé.
